# FASCICULE DE BREVET EUROPEEN

(11) **EP 0 891 888 B1**
(45) Date de publication et mention de la délivrance du brevet: **09.04.2003**
(21) Numéro de dépôt: 98420116.0
(22) Date de dépôt: 07.07.1998
(51) Int. Cl.: B60N 2/08

(54) **Dispositif de fixation et de réglage de la position longitudinale d'un siège amovible et retournable pour véhicule**
Vorrichtung zum Befestigen und Längsverstellen eines herausnehmbaren und umwendbaren Fahrzeugsitzes
Device for fixing and adjusting the longitudinal position of a removable and reversible vehicle seat

(30) Priorité: 15.07.1997 FR 9709198
(43) Date de publication de la demande: 20.01.1999
(73) Titulaire: Grupo Antolin-Ingenieria S.A., 09080 Burgos (ES)
(72) Inventeur: Chabanne, Jean-Pierre, 89710 Champvallon (FR); Duchateau, Jean, 43330 Pont Salomon (FR)
(74) Mandataire: Maureau, Philippe

(56) Documents cités:
- DE-A- 3 928 720
- DE-A- 3 935 359
- FR-A- 2 702 717
- US-A- 4 154 422
- US-A- 4 993 679
- US-A- 5 172 882

## Description

L'invention concerne un dispositif de fixation et de réglage de la position longitudinale d'un siège amovible et retournable pour véhicule.

On connaît déjà de nombreux dispositifs comprenant au moins deux glissières parallèles fixées au plancher du véhicule et deux coulisseaux déplaçables par rapport aux glissières et porteurs de moyens de fixation coopérant avec ceux ménagés sur chacun des quatre pieds du siège, dispositif dans lequel chaque coulisseau a une section en U retourné ou en E couché et est muni de moyens de verrouillage qui, coopérant avec des logements fixes de sa glissière, peuvent être amenés en position déverrouillée, à l'encontre de moyens de rappel à ressorts, par une commande manuelle portée par le châssis du siège.

Il en est ainsi, par exemple, dans le brevet français FR-A-2 702 717 mettant en oeuvre des glissières ayant, en section transversale, une forme générale en C et contenant des coulisseaux ayant la même section transversale.

De tels dispositifs sont en particulier destinés aux véhicules de type monospace dans lesquels un même siège peut occuper, sur le plancher, plusieurs positions transversales et longitudinales en fonction de la répartition des glissières sur ce plancher et des coulisseaux sur les glissières.

En raison de l'évolution des législations imposant le port de la ceinture par chaque passager, les sièges amovibles ont été restructurés pour recevoir les points d'accrochage de ladite ceinture et pour mieux résister aux efforts tendant, lors d'un choc, à déplacer le passager lié à son siège. Les dispositifs actuels de fixation et de réglage du siège se révèlent être assez fragiles et, pour la plupart, insuffisamment résistants.

Il en est ainsi par exemple de ceux dont les ailes des glissières sont munies de rangées de perforations qui, nécessaires aux réglages longitudinaux des sièges, réduisent la section résistante de la glissière, donc la résistance de la fixation du siège.

A ces contraintes physiques, s'ajoutent des contraintes pratiques. En effet, l'espace intérieur du véhicule pouvant être occupé comme un bureau, c'est-à-dire avec des sièges tournés dos à la route, il importe que les moyens de réglage de la position longitudinale d'un siège par rapport à ces glissières puissent être utilisés quelle que soit la position du siège, face à la route ou dos à la route, et alors même que la commande de déverrouillage est disposée à proximité des pieds avant. Par ailleurs, il est souhaitable que les coulisseaux puissent être facilement réglés, avant mise en place du siège, par exemple pour les positionner sur les glissières.

La plupart des dispositifs actuels ne satisfont pas à ces contraintes pratiques et ceux qui les satisfont le font par des structures complexes, alourdissant le poids général du dispositif, alors même que l'on recherche à l'alléger pour économiser l'énergie du véhicule.

La présente invention a pour objet de remédier à ces inconvénients en fournissant un dispositif de fixation et de réglage qui, tout en assurant la résistance recherchée, soit plus léger, utilisable dans toutes les positions du siège et même de manière manuelle.

A cet effet, dans le dispositif selon l'invention, chaque glissière est réalisée en alliage métallique léger et est divisée par des nervures horizontales internes en un compartiment inférieur, recevant une platine en acier portant deux rangées parallèles de perforations, espacées longitudinalement, et un compartiment supérieur servant de logement au coulisseau, également en alliage métallique léger, tandis que, d'une part, le coulisseau est traversé, à proximité de chacune de ses extrémités, par deux axes horizontaux en acier dont les extrémités portent des galets roulant sur les nervures internes de la glissière et dont la partie centrale constitue un organe d'accrochage pour des moyens complémentaires équipant chaque pied du siège, ce pied étant introduit dans le coulisseau par une lumière ménagée dans son âme, et que, d'autre part, le coulisseau contient des moyens de verrouillage coopérant avec les perforations de la platine et actionnables depuis chacune des lumières de son âme.

Ainsi, chacun des pieds du siège est accroché sur deux axes en acier qui, traversant le coulisseau, s'appuient tous les deux sur les ailes de celui-ci en augmentant la surface de contact et, en conséquence, la résistance. De même, les rangées de perforations nécessaires au verrouillage de la position longitudinale du coulisseau par rapport à la glissière sont réalisées dans une plaque en acier qui, indépendante de la glissière, est en mesure, en cas de chocs, de résister aux efforts longitudinaux, sans que ceux-ci tendent à déformer l'âme de cette glissière. Enfin, les efforts verticaux d'arrachement sont repris par l'appui du coulisseau contre les retours coudés de la glissière à section en C, c'est-à-dire sont repris par une très grande surface, défavorable à l'écartement des ailes de la glissière par l'effort d'arrachement.

Dans une forme d'exécution de l'invention, les moyens de verrouillage du coulisseau dans la glissière comprennent deux leviers disposés longitudinalement dans le coulisseau, articulés par rapport à lui et comportant, chacun, à une extrémité, une denture apte à pénétrer dans les perforations de la platine et, à l'autre extrémité, une portée d'appui pour le ressort de rappel, ces deux leviers étant disposés de part et d'autre d'une bascule de commande qui, en appui sur une traverse reliant les deux leviers à l'opposé de leurs dentures, comporte à chaque extrémité un poussoir cylindrique vertical, monté coulissant dans la lumière correspondante du coulisseau et dans la trajectoire de la commande manuelle de déverrouillage, portée par un pied.

Ce dispositif de verrouillage augmente le nombre de dents en prise et, en conséquence, les sections résistantes. Par ailleurs, la bascule de commande vient en appui sur la traverse de liaison des leviers de verrouillage, pour provoquer le déverrouillage, quel que soit le poussoir qui est sollicité. Elle fonctionne donc que les moyens de commande du déverrouillage, soient eux-mêmes disposés sur la partie avant ou sur la partie arrière du coulisseau. De plus, chacun des poussoirs peut être actionné, manuellement et directement, pour déplacer le coulisseau par rapport à la glissière, par exemple, pour l'amener à côté du coulisseau de la glissière voisine, en prévision de la mise en place d'un siège.

D'autres caractéristiques et avantages ressortiront de la description qui suit en référence au dessin schématique annexé représentant, à titre d'exemples, plusieurs formes d'exécution du dispositif selon l'invention.
Figure 1 est une vue de côté en coupe longitudinale d'une première forme d'exécution du dispositif,
Figure 2 est une vue en perspective éclatée des éléments essentiels de ce dispositif,
Figures 3 et 4 sont des vues en coupe transversale suivant, respectivement III-III et IV-IV de figure 1 montrant, à échelle agrandie, respectivement les moyens de fixation du siège sur le coulisseau et l'articulation des leviers de verrouillage par rapport au coulisseau,
Figures 5 et 6 sont des vues partielles en coupe longitudinale montrant, à échelle agrandie, un levier de déverrouillage lorsqu'il est sollicité, dans le sens du déverrouillage, respectivement, par le doigt avant et par le doigt arrière de la bascule de commande,
Figures 7 et 8 sont des vues en coupe transversale similaires aux figures 3 et 4, mais dans le cas d'une glissière double pouvant recevoir les pieds latéraux de sièges ayant deux empattements différents et dont les autres pieds sont disposés dans une glissière selon les figures précédentes,
Figure 9 est une vue en coupe horizontale de la glissière montrant la forme particulière de la bascule.

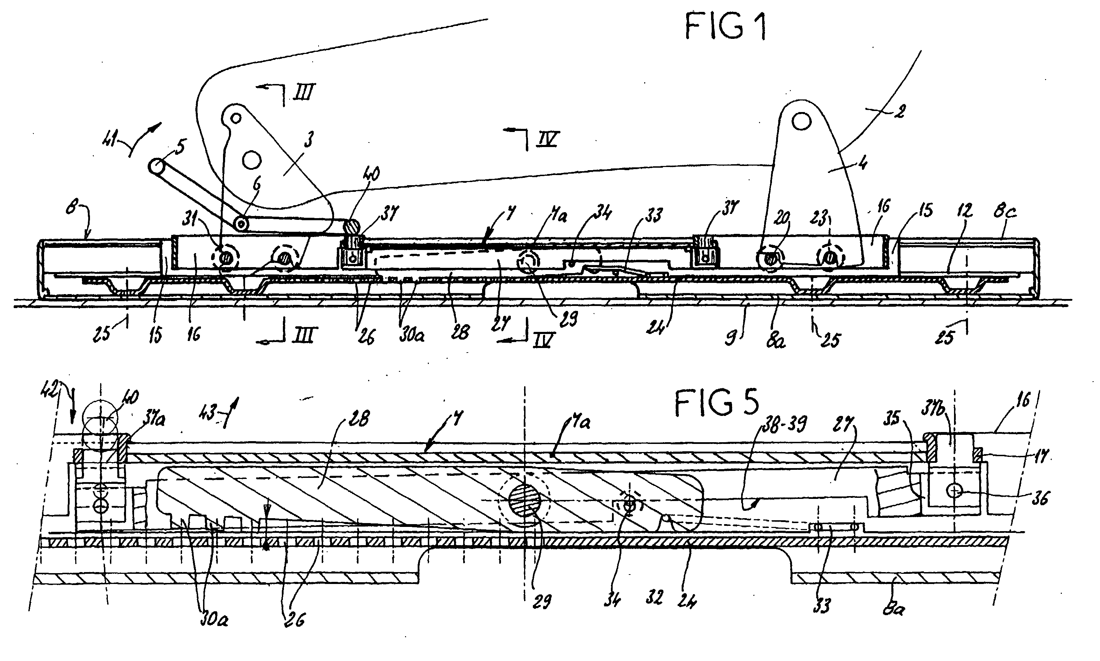

A la figure 1, la référence numérique 2 désigne le châssis d'un siège portant deux pieds avant 3 et deux pieds arrière 4. Chaque pied est équipé de moyens d'accrochage, non représentés, actionnés par des moyens de commande non représentés. Le châssis 2 porte, au niveau des pieds avant, une commande manuelle constituée par un levier 5, articulé en 6 sur le châssis, et apte à assurer le déverrouillage du siège par rapport au dispositif de fixation.

De chaque côté du siège, les pieds avant 3 et arrière 4, sont fixés sur un coulisseau 7, déplaçable par rapport à une glissière 8 fixée sur le plancher du véhicule 9.

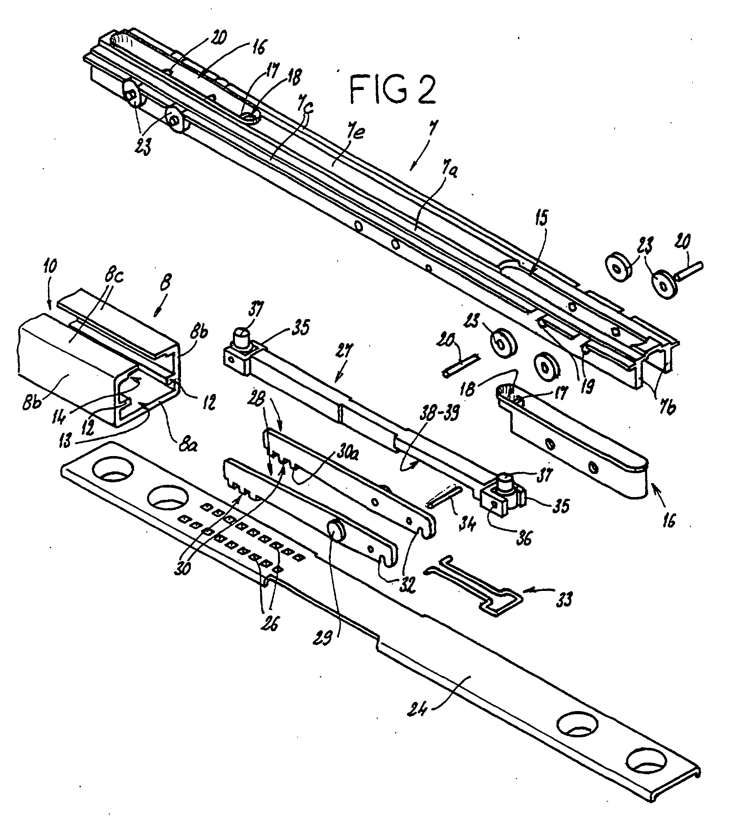

Selon l'invention, et comme montré plus en détails à la figure 2, la glissière 8 est constituée par un profilé en alliage léger, et par exemple d'aluminium, présentant, en section transversale, la forme générale d'un C, c'est à dire composé d'une âme 8a, de deux ailes 8b, et de deux retours coudés supérieurs 8c délimitant entre eux, une fente 10. Deux nervures horizontales internes 12 divisent la cavité interne de la glissière 8 en un compartiment inférieur 13 et en un compartiment supérieur 14.

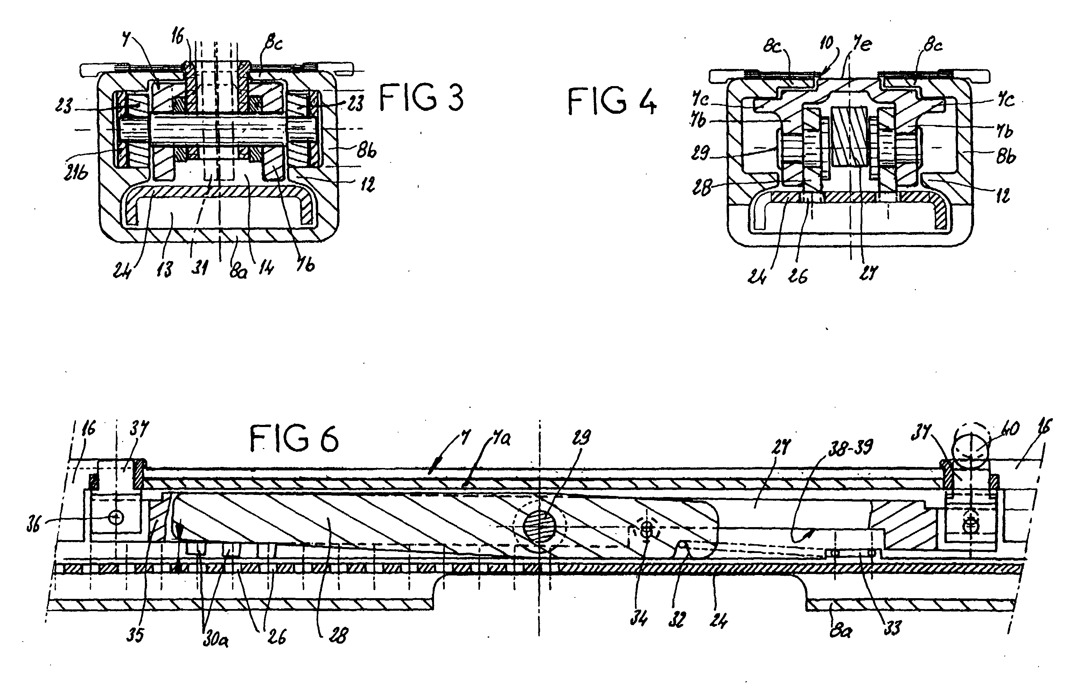

Le coulisseau 7 est également réalisé dans un profilé en alliage léger, et par exemple d'aluminium. Il présente une section transversale en U retourné, c'est à dire est composé d'une âme 7a et de deux ailes 7b. Son âme se prolonge, au-delà des ailes 7b, par des ailettes 7c. L'âme 7a est traversée, à proximité de chacune de ses extrémités, par des lumières longitudinales oblongues 15. Chaque lumière est destinée à recevoir une cheminée tubulaire en matière synthétique 16. La figure 3 montre que cette dernière traverse également la fente 10 de la glissière, pour former un organe de guidage du pied du siège. La cheminée 16 est munie, à son extrémité interne, c'est à dire à son extrémité qui est tournée vers l'autre lumière du coulisseau, d'une paroi horizontale 17 traversée par un alésage 18, dont l'utilité sera précisée plus loin.

Les ailes 7b du coulisseau 7 sont traversées chacune par deux alésages espacés 19 pour deux axes 20 épaulés à chaque extrémité et en acier. Ses extrémités, de plus petit diamètre, dépassent hors du coulisseau et servent de portées pour des galets 23 roulant sur les nervures internes 12 de la glissière 8. Un patin 21 relie les parties des deux axes 20 qui débordent des galets 23 disposés d'un même côté.

Ce patin, qui est visible en plan par dessus est réalisé en matière synthétique et comporte une partie centrale 21a qui compense élastiquement les jeux latéraux entre les ailes 8b de la glissière 8 et les ailes 7b du coulisseau 7, mais aussi des ailes 21b qui compensent les jeux verticaux entre les nervures internes 12 et les retours coudés 8c de la glissière 8. Ces patins réduisent les bruits et améliorent le confort du passager.

La figure 3 montre bien que l'ensemble du coulisseau 7 est disposé dans le compartiment supérieur 14 de la glissière 8 qui l'emprisonne par ses retours coudés 8c, et que son âme 7a forme une nervure centrale de guidage longitudinale 7e qui coulisse dans la fente 10 de la glissière 8.

La partie centrale de chaque axe 20, c'est-à-dire la partie qui est disposée dans la cheminée 16, est destinée à servir à l'accrochage des moyens de fixation de l'un des pieds d'un siège et, par exemple, de crochets 31 articulés sur ce pied.

Le compartiment inférieur 13 sert de logement à une platine 24 qui, dans la forme d'exécution représentée aux figures 1 à 6, présente une section transversale en U retourné. Cette platine est réalisée en acier et est liée à la glissière 8 par les rivets 25 assurant la fixation de celle-ci sur le plancher 9 du véhicule. Cette platine est traversée par deux rangées parallèles de perforations espacées 26, réparties dans chaque rangée avec un pas constant. On notera que ces perforations sont de faibles dimensions et affectent peu la résistance de la platine 24.

Les perforations 26 sont destinées à coopérer avec des moyens assurant le verrouillage du coulisseau 7 sur la glissière 8. Ces moyens comprennent une bascule longitudinale et centrale 27 bordée par deux leviers longitudinaux 28.

Comme le montre plus en détails la figure 4, chaque levier 28, qui est réalisé en acier, est articulé sur un pivot 29 dont le corps traverse l'une des ailes 7b du coulisseau et dont la tête est disposée à l'intérieur du coulisseau, près de la bascule 27.

Cette figure 4 montre également que les ailettes 7c du coulisseau sont très proches des faces internes des retours coudés 8c de la glissière 8, de manière à ne pas frotter contre elles mais à pouvoir venir contre elles, en cas d'effort vertical tendant à extraire le coulisseau de la glissière, afin de répartir l'effort sur toute la longueur de ce coulisseau, hors des zones où ces ailettes 7c ne sont pas découpées pour favoriser la libre rotation des galets 23.

Chaque levier 28 est muni, à son extrémité avant, d'une denture 30 composée de plusieurs dents 30a aptes à pénétrer dans les perforations 26 de la platine 24. A son extrémité arrière, chaque levier 28 est muni d'une portée d'appui 32 pour un moyen à ressort constitué par exemple par une épingle ressort 33. En avant de la portée 32, les deux leviers 28 sont reliés par une traverse 34 qui, par exemple, est constituée par une goupille.

La bascule de commande 27 est réalisée en matière synthétique. Elle comporte, à chacune de ses extrémités, une chape 35 traversée par un axe horizontal et transversal 36 sur lequel est articulée la partie inférieure d'un poussoir cylindrique 37 saillant verticalement vers le haut. Dans sa partie arrière, la bascule 27 comporte un dégagement inférieur 38 délimitant une face de butée 39 par laquelle elle est en appui sur la traverse 34 reliant les deux leviers 28.

En position normale, montrée à la figure 1, l'épingle 33 soumet les leviers à un couple de basculement obligeant leurs dentures 30 à pénétrer dans les perforations 26 de la platine 24 pour immobiliser le coulisseau et, en conséquence, le siège par rapport à la glissière 8 correspondante.

On notera que, dans cette position, les deux poussoirs verticaux 37 qui coulissent librement dans les alésages 18 des cheminées 16, affleurent la partie supérieure de ces cheminées. La figure 1 montre que, au moins l'un des deux poussoirs est disposé dans la trajectoire des moyens manuels de la commande de déverrouillage, moyens qui, dans la forme d'exécution représentée, sont constitués par un doigt 40 porté par le levier 5.

Pour régler longitudinalement un siège disposé face à la route, l'opérateur doit faire pivoter, dans le sens de la flèche 41, le levier 5 afin que le doigt 40 venant en contact contre le poussoir avant 37a (figure 5) déplace celui-ci dans le sens de la flèche 42.

Sous l'action de ce déplacement, la bascule 27, dans un premier temps, pivote autour de la traverse 34 jusqu'à l'appui de l'épaulement du poussoir arrière 37b contre la face 17 de la cheminée 16, puis, dans un deuxième temps et à partir de cet appui, pivote autour de l'axe 36 du poussoir 37b arrière et provoque donc l'abaissement de la traverse 34. Cela a pour conséquence de faire pivoter les deux leviers 28 dans le sens de la flèche 43 et d'extraire leurs dentures des perforations 26 de la platine 24, en assurant le déverrouillage du coulisseau 7 par rapport à cette platine. Après déplacement du siège et réglage de sa position, le relâchement du levier 5 permet au ressort en épingle 33 de faire basculer en sens inverse les leviers 28, en assurant l'engagement de leurs dentures dans les perforations 26, et simultanément et par la traverse 34, le redressement de la bascule 27 et le retour en position de repos des deux poussoirs 37a, 37b.

La figure 6 montre que la bascule permet de commander la même fonction de déverrouillage, lorsque le siège est tourné dos à la route et que le levier de commande 5 est disposé sur l'arrière et prend appui, par son doigt 40, sur le poussoir vertical arrière 37b.

Il ressort de ce qui précède que ce dispositif :
- assure une liaison pied-coulisseau très résistante, puisque mettant en oeuvre deux axes en acier de forte section,
- assure une très bonne résistance à l'arrachement vertical par appui des ailettes 7c du coulisseau 7 contre les retours coudés 8c de la glissière 8,
- assure également une excellente résistance à l'arrachement longitudinal par engagement de plusieurs dents dans des perforations de faible section, réalisées dans une platine en acier donc, très résistante,
- renforce la liaison de la glissière sur le plancher en intercalant la platine 24 en acier,
- facilite le réglage longitudinal en réduisant les frottements grâce à l'utilisation de galets,
- allège l'ensemble du dispositif en utilisant pour les pièces non soumises aux efforts, des pièces 7 et 8 en alliage d'aluminium, ou des pièces 16, 23, 27 en matière synthétique,
- permet la réversibilité de la commande de déverrouillage, sans mécanisme complexe,
- et permet l'actionnement manuel des glissières par simple pression du doigt de la main sur l'un ou l'autre des poussoirs verticaux de commande de déverrouillage.

Dans la description qui suit, les pièces identiques à celles de la forme d'exécution précédente garderont le même numéro de référence, les pièces modifiées auront leur référence majorée de 100, et les pièces nouvelles seront référencées à partir de 50.

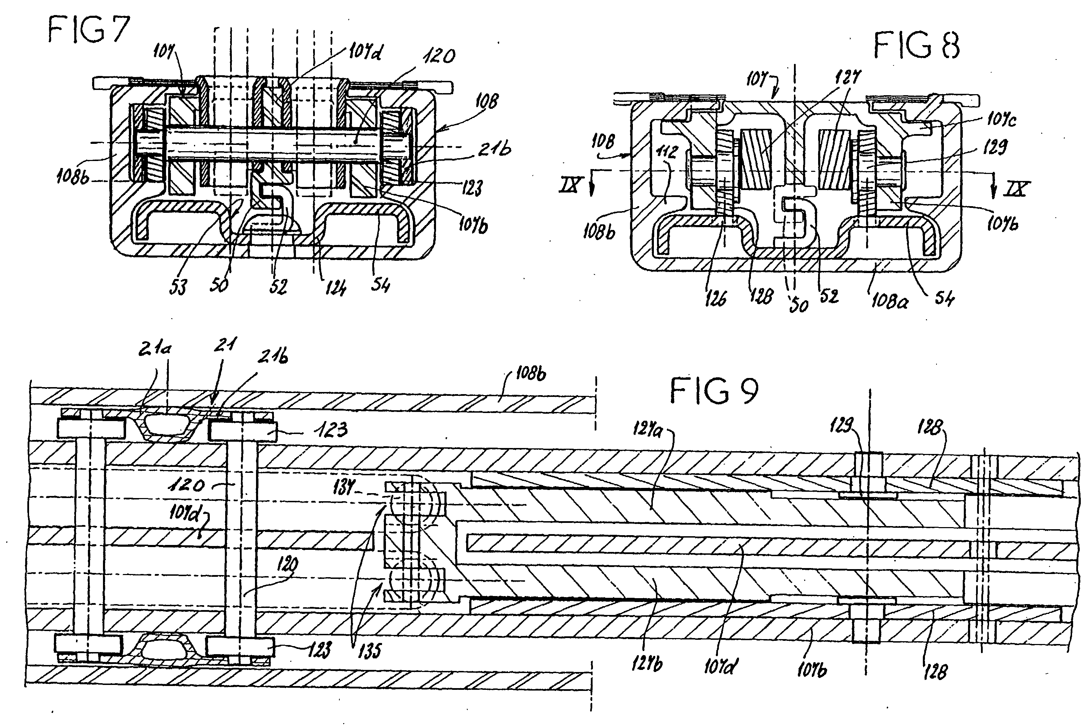

La figure 7 montre que le dispositif, selon l'invention, peut être mis en oeuvre dans une glissière double 108 qui, disposée à côté d'une glissière simple, permet de recevoir des sièges ayant deux types d'empattement. Dans ce cas, la glissière 108 est élargie et le coulisseau 107 comporte une aile centrale 107d lui donnant, en section transversale, la forme d'un E couché. Cette aile 107d est prolongée vers le bas, au-dessous des ailes latérales 107b, pour former un crochet 50 apte à coopérer avec un crochet complémentaire 52 solidaire de la platine 124. Le crochet 52 est disposé dans une gorge 53, ménagée au milieu de la platine 124 qui comporte donc deux zones longitudinales espacées 54 dans chacune desquelles est réalisée une rangée de perforations 26. Cette forme d'exécution ne met en oeuvre que deux leviers 128 qui, identiques au levier 28 de la forme d'exécution précédente, sont fixés de la même façon sur les ailes 107b, comme le montre la figure 8. La bascule 127 comprend deux branches 127a, 127b qui sont disposées de part et l'autre de l'aile centrale 107d et qui, comme le montre la figure 9, sont reliées à leurs extrémités et conformées pour former deux chapes 135 sur chacune desquelles est articulé un poussoir 137.

Grâce à cet agencement, la bascule 127 peut toujours être actionnée dans le sens du déverrouillage, quel que soit l'empattement du siège, et plus précisément, quelle que soit la position transversale du levier 5 de commande de déverrouillage, puisque, que le siège soit large ou étroit, son levier de commande 5 rencontre toujours un poussoir vertical 137 pouvant provoquer le basculement.

Par la présence de l'ailette 107d avec son crochet 50 coopérant avec celui 52 de la platine 124, ce dispositif est aussi résistant à l'arrachement vertical vers le haut que le dispositif précédemment décrit.

La figure 9 montre que les axes 120 sont plus longs mais sont renforcés par leur traversée de l'aile centrale 107d.

## Revendications

1. Dispositif de fixation et de réglage de la position longitudinale d'un siège, amovible et retournable, pour véhicule, comprenant au moins deux glissières (8, 108) parallèles fixées au plancher (9) du véhicule et deux coulisseaux (7, 107) déplacables par rapport aux glissières et porteurs de moyens de fixation coopérant avec ceux ménagés sur chacun des quatre pieds (3, 4) du siège, dispositif dans lequel chaque coulisseau (7, 107) a une section en U retourné ou en E couché et est muni de moyens de verrouillage qui, coopérant avec des logements fixes de la glissière peuvent être amenés en position déverrouillée, à l'encontre de moyens de rappel à ressorts, par une commande manuelle (5) portée par le châssis (2) du siège, et dans lequel chaque glissière a une section transversale en C, et contient le coulisseau, **caractérisé en ce que** chaque glissière (8, 108) est réalisée en alliage métallique léger et est divisée par des nervures horizontales internes (12, 112) en un compartiment inférieur (13, 113), recevant une platine (24, 124) en acier portant deux rangées parallèles de perforations (26, 126), espacées longitudinalement, et un compartiment supérieur (14, 114) servant de logement au coulisseau (7, 107), également en alliage métallique léger, tandis que, d'une part, le coulisseau est traversé à proximité de chacune de ses extrémités, par des axes horizontaux (34, 134) en acier dont les extrémités portent des galets (23, 123) roulant sur les nervures internes (12, 112) de la glissière (8, 108) et dont la partie centrale constitue un organe d'accrochage pour des moyens complémentaires équipant chaque pied (3, 4) du siège, ce pied étant introduit dans le coulisseau par une lumière ménagée dans l'âme (7a, 107a) du coulisseau, et que, d'autre part, le coulisseau (7, 107) contient des moyens de verrouillage (28, 128; 33, 133) coopérant avec les perforations (26, 126) de la platine (24, 124) et actionnables depuis chacune des lumières (15, 115) ménagées dans l'âme de ce coulisseau pour le passage des pieds.

2. Dispositif selon la revendication 1, **caractérisé en ce que**, les moyens de verrouillage du coulisseau dans la glissière comprennent deux leviers (28) disposés longitudinalement dans le coulisseau (7), articulés par rapport à lui et comportant, chacun, à une extrémité, une denture (30) apte à pénétrer dans les perforations (26) de la platine (24) et, à l'autre extrémité, une portée d'appui (39) pour le ressort de rappel (33), ces deux leviers (28) étant disposés de part et d'autre d'une bascule de commande (27) qui, en appui sur une traverse (34) reliant les deux leviers (28), comporte à chaque extrémité un poussoir cylindrique vertical (37), disposé dans la trajectoire de la commande manuelle de déverrouillage (5, 40), portée par un pied avant de chaque siège.

3. Dispositif selon l'ensemble des revendications 1 et 2, **caractérisé en ce que**, dans chacune des lumières (15) de l'âme du coulisseau (7), est engagé une cheminée verticale (16) de réception d'un pied du siège, cette cheminée comportant, à son extrémité interne, une paroi horizontale (17) qui est traversée par un alésage (18) de guidage de l'extrémité du poussoir vertical (37) et forme butée d'appui pour l'épaulement dont est muni ce poussoir de commande.

4. Dispositif selon la revendication 3, **caractérisé en ce que** chaque poussoir de commande (37) est articulé, autour d'un axe transversal horizontal (36), dans une chape (35) ménagée à chacune des extrémités de la bascule de commande (27).

5. Dispositif selon la revendication 1, **caractérisé en ce que** l'âme (7a) du coulisseau (7) est munie d'une nervure centrale (7c) de guidage longitudinal montée coulissante dans la fente (10) de la glissière (8) et est bordée par deux ailes latérales (7c) qui, sans contact avec les retours coudés (8c) de la glissière en C, sont aptes à s'appuyer contre ces retours pour s'opposer à un effort vertical d'arrachement.

6. Dispositif selon la revendication 1, **caractérisé en ce qu'**un patin (21), en matière synthétique et reliant les extrémités des axes (20) disposées d'un même côté du coulisseau, comporte une partie centrale (21a) compensant élastiquement les jeux latéraux et des ailes (21b) compensant les jeux verticaux entre la glissière (7) et le coulisseau (8).

## Claims

1. A device for fixing and adjusting the longitudinal position of a removable and reversible seat for a vehicle, comprising at least two parallel glide bars (8, 108) fixed to the floor (9) of the vehicle and two sliding members (7, 107) which are displaceable relative to the glide bars and bear fixing means co-operating with those provided on each of the four feet (3, 4) of the seat, in which each sliding member (7, 107) has a section shaped like an inverted U or a sloping E and is provided with bolting means which, co-operating with fixed receptacles on the glide bar, can be brought into an unlocking position - in opposition to spring-type return means - by a manual controller (5) borne by the frame (2) of the seat, and in which each glide bar has a C-shaped cross-section and contains the sliding member, **characterised in that** each glide bar (8, 108) is made of a light metal alloy and is subdivided by internal horizontal ribs (12, 112) into a lower compartment (13, 113), receiving a steel plate (24, 124) bearing two parallel rows of perforations (26, 126) spaced apart longitudinally, and an upper compartment (14, 114) serving to accommodate the sliding member (7, 107), similarly made of a light metal alloy, while on the one hand the sliding member is crossed in the vicinity of each of its ends by horizontal steel shafts (34, 134) the ends of which bear rollers (23, 123) rolling on the internal ribs (12, 112) of the glide bar (8, 108) and the central part of which constitutes a member for securing complementary means equipping each foot (3, 4) of the seat, the said foot being introduced into the sliding member via an opening provided in the core (7a, 107a) of the sliding member and, on the other hand, the sliding member (7, 107) contains bolting means (28, 128; 33, 133) which co-operate with the perforations (26, 126) of the plate (24, 124) and are actuable from each of the openings (15, 115) provided in the core of the said sliding member for the passage of the feet.

2. A device according to Claim 1, **characterised in that** the means for bolting the sliding member in the glide bar comprise two levers (28) arranged longitudinally in the sliding member (7), hinged relative thereto and each comprising, at one end, toothing (30) capable of penetrating into the perforations (26) of the plate (24) and, at the other end, a bearing surface (39) for the return spring (33), the said two levers (28) being arranged on either side of a control balance (27) which, resting on a cross-piece (34) connecting the two levers (28), comprises at each end a cylindrical vertical pushing piece (37) positioned in the path of the manual unbolting controller (5, 40) borne by a front foot of each seat.

3. A device according to both of Claims 1 and 2, **characterised in that**, for accommodating a foot of the seat, a vertical shaft (16) is inserted into each of the openings (15) of the core of the sliding member (7), the said shaft comprising, at its internal end, a horizontal wall (17) which has a bore (18) passing through it for guiding the end of the vertical pushing piece (37) and forms a thrust bearing for the shoulder with which the said control pushing piece is provided.

4. A device according to Claim 3, **characterised in that** each control pushing piece (37) is hinged about a horizontal transverse shaft (36), in a clevis (35) provided in each of the ends of the control balance.

5. A device according to Claim 1, **characterised in that** the core (7a) of the sliding member (7) is provided with a central rib (7c) for longitudinal guiding which is slidably mounted in the slot (10) in the glide bar (8) and is bordered by two lateral wings (7c) which, without contact with the angled bends (8c) of the C-shaped glide bar, are capable of coming to bear against the said bends in opposition to a vertical wrenching force.

6. A device according to Claim 1, **characterised in that** a block (21), made of a synthetic material and connecting the ends of the shafts (20) arranged on the same of the sliding member, comprises a central part (21a) compensating elastically for the lateral play, and wings (21b) compensating for the vertical play between the glide bar (7) and the sliding member (8).

## Patentansprüche

1. Vorrichtung zum Befestigen und Einstellen der Längsposition eines wegnehmbaren und umdrehbaren Fahrzeugsitzes, die mindestens zwei parallele Gleitschienen (8, 108) umfasst, die im Boden (9) des Fahrzeugs verankert sind, sowie zwei Schlitten (7, 107), die bezüglich der Schienen verlagerbar sind und Befestigungsmittel tragen, die mit denjenigen zusammenwirken, die an jedem der vier Füße (3, 4) des Sitzes vorgesehen sind, eine Vorrichtung, bei der jeder Schlitten (7, 107) den Querschnitt eines umgekehrten U oder eines liegenden E hat und mit Verriegelungsmitteln versehen ist, die, indem sie mit festen Aufnahmen der Gleitschiene zusammenwirken, gegen die Wirkung von Rückholfedermitteln durch eine von dem Sitzgestell (2) getragene, manuelle Steuerung (5) in entriegelte Stellung gebracht werden können, und bei der jede Gleitschiene einen C-förmigen Querschnitt hat und den Schlitten enthält, **dadurch gekennzeichnet, dass** jede Gleitschiene (8, 108) aus einer Leichtmetalllegierung besteht und durch horizontale Innenrippen (12, 112) geteilt ist in ein unteres Fach (13, 113), das eine Platte (24, 124) aus Stahl aufnimmt, die zwei parallele, längs beabstandete Reihen von Lochungen (26, 126) aufweist, und ein oberes Fach (14, 114), das als Aufnahme für den Schlitten (7, 107) dient und ebenfalls aus einer Leichtmetalllegierung besteht, während einerseits durch den Schlitten nahe jedem seiner Enden Horizontalbolzen aus Stahl (34, 134) geführt sind, deren Enden Rollen (23, 123) tragen, die auf den Innenrippen (12, 112) der Gleitschiene (8, 108) rollen und deren Mittelteil eine Befestigungseinrichtung für komplementäre Mittel bildet, die jeden Fuß (3, 4) des Sitzes ausstatten, wobei dieser Fuß in den Schlitten durch eine Öffnung eingeführt wird, die im Kern (7a, 107a) des Schlittens vorgesehen ist, und dass andererseits der Schlitten (7, 107) Verriegelungsmittel (28, 128; 33, 133) umfasst, die mit den Lochungen (16, 116) der Platte (24, 124) zusammenwirken und von jeder der im Kern dieses Schlittens für die Durchführung der Füße vorgesehenen Öffnungen (15, 115) aus betätigt werden können.

2. Vorrichtung nach Anspruch 1, **dadurch gekennzeichnet, dass** die Verriegelungsmittel des Schlittens in der Gleitschiene zwei Hebel (28) umfassen, die der Länge nach in diesem Schlitten (7) und bezüglich diesem gelenkig angeordnet sind und jeweils an einem Ende eine Zahnung (30) aufweisen, die geeignet ist, in die Lochungen (26) der Platte (24) einzugreifen, und am anderen Ende eine Anlagefläche (39) für die Rückholfeder (33) umfassen, welche beiden Hebel (28) beidseits einer Steuerungskippvorrichtung (27) angeordnet sind, die, aufliegend auf einem Querelement (34), das die beiden Hebel (28) verbindet, an jedem Ende einen zylindrischen, vertikalen Stößel (37) aufweist, der auf dem Weg der manuellen Entriegelungssteuerung (5, 40) angeordnet ist und von einem Vorderfuß jedes Sitzes getragen wird.

3. Vorrichtung nach den Ansprüchen 1 und 2, **dadurch gekennzeichnet, dass** in jeder der Öffnungen (15) des Kerns des Schlittens (7) ein vertikaler Schacht (16) zur Aufnahme eines Fußes des Sitzes eingeschoben ist, welcher Schacht an seinem inneren Ende eine horizontale Wand (17) aufweist, durch die eine Bohrung (18) zur Führung des Endes des vertikalen Stößels (37) geführt ist, und die einen Anschlag für die Erhöhung bildet, mit der dieser Steuerungsstößel versehen ist.

4. Vorrichtung nach Anspruch 3, **dadurch gekennzeichnet, dass** jeder Steuerungsstößel (37) um eine horizontale Querachse (36) in einer Abdeckung (35) angelenkt ist, die an jedem der Enden der Steuerungskippvorrichtung (27) vorgesehen ist.

5. Vorrichtung nach Anspruch 1, **dadurch gekennzeichnet, dass** der Kern (7a) des Schlittens (7) mit einer zentralen Rippe (7c) zur Längsführung versehen ist, die in dem Spalt (10) der Gleitschiene (8) gleitend montiert und von zwei Seitenflügeln (7c) begrenzt ist, die ohne Berührung mit den gekrümmten Bereichen (8c) der C-förmigen Gleitschiene geeignet sind, an diese Krümmungen anzuliegen, um sich einer vertikalen Ausreißkraft entgegenzusetzen.

6. Vorrichtung nach Anspruch 1, **dadurch gekennzeichnet, dass** ein Gleitschuh (21) aus Kunststoff, der die Enden der Bolzen (20) miteinander verbindet, die auf ein und derselben Seite des Schlittens angeordnet sind, einen mittleren Bereich (21a) umfasst, der das seitliche Spiel ausgleicht, sowie Flügel (21b) umfasst, die das Vertikalspiel zwischen Gleitschiene (7) und Schlitten (8) ausgleichen.
